**Europäisches Patentamt**

(19) **European Patent Office**

**Office européen des brevets**

(11) Veröffentlichungsnummer: **0 123 957**
**B1**

(12) # EUROPÄISCHE PATENTSCHRIFT

(45) Veröffentlichungstag der Patentschrift:
**12.07.89**

(51) Int. Cl.⁴: **B 23 B 17/00**

(21) Anmeldenummer: **84103737.7**

(22) Anmeldetag: **04.04.84**

(54) **Maschinenbett.**

(30) Priorität: **18.04.83 DE 3313980**

(43) Veröffentlichungstag der Anmeldung:
**07.11.84 Patentblatt 84/45**

(45) Bekanntmachung des Hinweises auf die Patenterteilung:
**12.07.89 Patentblatt 89/28**

(84) Benannte Vertragsstaaten:
**CH FR GB LI SE**

(56) Entgegenhaltungen:
**DE-B-1 069 244**
**DE-C-413 357**
**DE-C-975 695**
**DE-C-977 621**
**FR-A-1 157 956**

(73) Patentinhaber: **Boehringer Werkzeugmaschinen GmbH, Stuttgarter Strasse 50 Postfach 220, D-7320 Göppingen (DE)**

(72) Erfinder: **Gloser, Wolfgang, Blumenstrasse 22, D-7321 Börtlingen (DE)**
Erfinder: **Kuhn, Siegfried, Kornbergstrasse 28/1, D-7321 Dürnau (DE)**
Erfinder: **Räder, Robert, St.- Galler- Strasse 17, D-7320 Göppingen (DE)**
Erfinder: **Setzer, Friedhelm, Nördliche Ringstrasse 6, D-7320 Göppingen (DE)**
Erfinder: **Kienhöfer, Hermann, Laichingerstrasse 21, D-7320 Göppingen (DE)**
Erfinder: **Mühlich, Werner, Steingrubenweg 21, D-7334 Süssen (DE)**

(74) Vertreter: **Vogeser, Werner, Dipl.- Ing., Patentanwälte Hansmann & Vogeser Albert- Rosshaupter- Strasse 65, D-8000 München 70 (DE)**

EP 0 123 957 B1

## Beschreibung

Die Erfindung betrifft eine Drehmaschine entsprechend dem Oberbegriff des Patentanspruchs.

Werkzeugmaschinen, die eine Prismenführung mit nach oben gerichteten Führungsflächen aufweisen, sind aus der DE-C-975 695 und der DE-C-413 357 bekannt. Bei in dieser Weise ausgebildeten Führungen können vor allem bei Werkstücken mit hohem Gewicht und bei Auftreten hoher Bearbeitungskräfte Drehmomente erzeugt werden, die dazu neigen, die auf der Hauptführung geführten Baugruppen von einer der Führungen abzuheben, so daß sich eine instabile Lage ergibt. Dies kann zu einem unruhigen Lauf der Maschine und zu Ratterbewegungen führen.

Der Erfindung liegt die Aufgabe zugrunde, die Maschine der eingangs genannten Art so auszubilden, daß sich bei möglichst ruhigem Lauf der Maschine eine stabile Lage der auf der Hauptführung geführten Baugruppen ergibt.

Gelöst wird diese Aufgabe gemäß der Erfindung durch die im kennzeichnenden Teil des Patentanspruchs angegebenen Merkmale.

Durch diese Ausbildung wird erreicht, daß die auf der Hauptführung gelagerten Baugruppen fest auf den zugehörigen Führungsflächen aufliegen und auch beim Auftreten hoher Bearbeitungskräfte gegen diese Flächen gedrückt werden, so daß sich eine ruhiger Lauf der Maschine und damit eine hohe Bearbeitungsgenauigkeit ergeben.

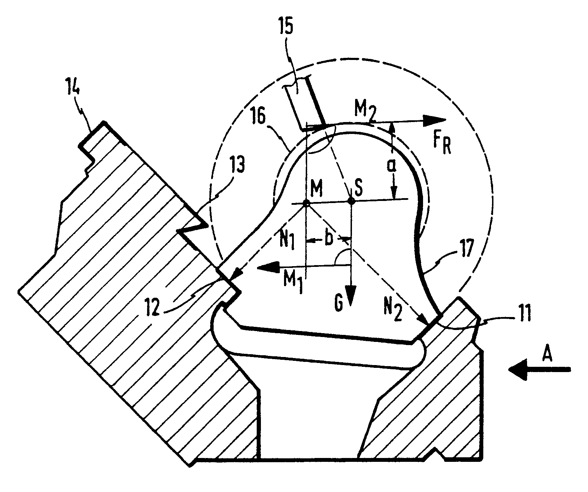

Die Erfindung wird nachstehend anhand der beigefügten Zeichnung beispielsweise erläutert, die schematisch eine Endansicht einer Drehmaschine zeigt.

Das Maschinenbett der schematisch dargestellten Drehmaschine hat eine Hauptführung in Form einer Prismenführung mit zwei Führungsbahnen 11, 12, von denen die eine eine nach oben und die andere eine nach unten gerichtete Führungsfläche hat. Die Führungsbahnen der Hauptführung liegen auf Tangenten eines Kreises, dessen Mittelpunkt auf der Spindelachse S liegt, auf der sich auch der Schwerpunkt eines gestrichelt gezeigten rotationssymmetrischen Werkstücks befindet. Auf der Hauptführung sind der Spindelstock 17 und der nicht gezeigte Reitstock der Drehmaschine geführt. Weitere Baugruppen können auf einer weiteren Führung angeordnet sein, die aus zwei Führungsbahnen 13 und 14 besteht.

Die Kraftnormalen $N_1$, $N_2$ auf die Führungsbahnen 11, 12 der Hauptführung schneiden sich in einem Punkt M, der vom Schwerpunkt des Werkstücks 16 bzw. dem Mittelpunkt des Kreises, der einen Durchmesser wenigstens gleich dem des größtmöglichen Werkstück-Umfangskreises hat, um die Strecke b entfernt ist. Die Führungsbahnen 11 und 12 liegen auf Tangenten dieses Kreises.

Ein am Werkstück 16 angreifendes Werkzeug 15 übt auf das Werkstück eine Kraft $F_R$ aus, deren Wirkungslinie vom Schwerpunkt S um die Strecke a entfernt ist.

Bei dieser Anordnung ergeben sich zwei gleichsinnige, einander unterstützende Drehmomente $M_1$ und $M_2$ nämlich eines aufgrund des Gewichts des Werkstücks und eines aufgrund der vom Werkstück ausgeübten Kraft, die den auf der Hauptführung 11, 12 geführten Spindelstock 17 gegen die nach unten gerichtete Führungsfläche der bezüglich der Bedienungsseite A hinteren Führungsbahn der Hauptführung drücken.

## Patentanspruch

Drehmaschine zur Bearbeitung rotationssymmetrischer Werkstücke, bestehend aus einem Maschinenbett mit zwei in unterschiedlichen, geneigten Ebenen liegenden Führungen mit je zwei Führungsbahnen, nämlich einer etwa horizontalen Hauptführung (11, 12) für den verfahrbaren Spindelstock (17), bei dem wenigstens die Führungsbahnen der Hauptführung auf sich schneidenden Tangenten oder Parallelen hierzu eines Kreises liegen, dessen Mittelpunkt auf der Spindelachse liegt und bei dem die eine Führungsbahn eine Prismenführung und die andere eine geneigte Flachführung ist, dadurch gekennzeichnet, daß die Prismenführung aus einer nach oben und einer nach unten gerichteten Führungsfläche besteht, und daß der Schnittpunkt (M), der sich beim Abstützen des Spindelstocks auf die nach oben gerichteten Flächen der Hauptführung (11, 12) ergebenden Kraftnormalen ($N_1$, $N_2$) ergibt, gegenüber der Spindelachse (S) derart versetzt ist, daß sich aufgrund des Werkstückgewichts und der Bearbeitungskraft ($F_R$) des Werkzeugs (15) gleichsinnige, einander unterstützende Drehmomente ($M_1$, $M_2$) ergeben, die den auf der Hauptführung (11, 12) geführten Spindelstock gegen die nach unten gerichtete Fläche der Prismenführung drücken.

## Claim

Lathe for processing rotationally symmetrical workpieces, consisting of a machine bed with two guides situated in different inclined planes and each having two guide paths, i. e. an approximately horizontal main guide 11, 12, for the transportable headstock 17, with which at least the guide paths of the main guide are situated on intersecting tangents of a circle or lines parallel thereto, the centre of the circle bing situated on the axis of the spindle, and with which one guide path is a prismatic guide and the other an inclined flat guide, characterized by the fact that the prismatic guide consists of one guide surface directed upwards and one guide surface directed downwards, and that the intersection point M of the force normals $N_1$, $N_2$ which results when the headstock is supported on the upward directed surfaces of the main guide 11, 12 is offset in relation to the axis S of the spindle in such a manner that as a result of the weight of the workpiece and of the force $F_R$ involved in processing the workpiece 15 torques $M_1$, $M_2$, are produced which take the same direction and which support each other and by which the headstock guides on the main guide 11, 22, is pressed against the downward directed surface of the prismatic guide.

**Revendication**

Tour pour l'usinage de pièces à symétrie de rotation, constituée d'un banc avec deux glissières différentes, disposées sur des plans inclinés, comportant chacune deux surfaces de glissement, savoir une glissière principale approximativement horizontale (11, 12) pour la poupée fixe déplaçable (17), où au moins les surfaces de guidage de la glissière principale se trouvent sur des tangentes sécantes, ou des parallèles à ces tangentes, à un cercle dont le centre se trouve sur l'axe de la broche, l'une des surfaces de guidage étant une glissière profilée et l'autre un guidage en plan incliné, caractérisé en ce que la glissière profilée est constituée d'une surface de guidage dirigée vers le haut et d'une surface de guidage dirigée vers le bas, et que le point d'intersection (M) des normales des forces ($N_1$, $N_2$) obtenues quand on appuie la contre-poupée sur les surfaces, dirigées vers le haut, de la glissière principale (11, 12), est décalé par rapport à l'axe de la broche (S) de façon qu'il se crée, du fait du poids de la pièce et de la force d'usinage ($F_R$) de la pièce (15), des moments ($M_1$, $M_2$), de même direction, se soutenant l'un l'autre, et qui appuient la contre-poupée guidée sur la glissière principale (11, 12) contre la surface, dirigée vers le bas, de la glissière profilée.